# EUROPÄISCHE PATENTSCHRIFT

(11) **EP 0 274 377 B1**
(45) Veröffentlichungstag und Bekanntmachung des Hinweises auf die Patenterteilung: **24.08.1994**
(21) Anmeldenummer: 88100049.1
(22) Anmeldetag: 05.01.1988
(51) Int. Cl.: G11B 5/588, G11B 27/30, G11B 5/008

(54) **Verfahren zur Übertragung eines Signals**
Method for transmitting a signal
Méthode de transmission d'un signal

(30) Priorität: 09.01.1987 DE 3700507
(43) Veröffentlichungstag der Anmeldung: 13.07.1988
(73) Patentinhaber: Deutsche Thomson-Brandt GmbH, 78003 Villingen-Schwenningen (DE)
(72) Erfinder: Scholz, Werner, Dipl.-Ing., D-3007 Gehrden (DE)

(56) Entgegenhaltungen:
- EP-A- 0 171 266
- US-A- 4 520 394

## Beschreibung

Die Erfindung betrifft ein Verfahren zur Übertragung eines Signals mit einem Pilot- und/oder Synchronisiersignal, dessen Frequenz nahe der unteren Frequenzgrenze des Übertragungskanals liegt.

Bei dem Aufzeichnungsverfahren R-DAT (Rotational-Digital Audio-Tape) werden entlang Schrägspuren eines Magnetbandes mit mehreren Köpfen digitale Audiosignale aufgezeichnet. Die Aufzeichnungsbitrate des digitalen Audiosignals beträgt dabei z.B. 9,4 Mbit/s.

Bei einem derartigen Aufzeichnungsverfahren ist es bekannt (IEEE Transactions on Consumer Electronics, Vol. CE-32. No 3. August 1986, Seiten 425 - 432), abwechselnd mit dem Nutzsignal jeweils entlang Teilen der Aufzeichnungsspur ein sogenanntes ATF (Automatic Track Finding)-Signal aufzuzeichnen, das bei der Wiedergabe zur Steuerung der Köpfe bzw. des Bandtransports im Sinne einer genauen Spurführung dient. Da bei einer automatischen Spurführungssteuerung die Signale der Nachbarspur gelesen werden müssen und somit die an sich zwischen benachbarten Spuren zur Übersprechdämpfung wirksamen sogenannten Azimutverluste nicht wirksam sein dürfen, wird für ein derartiges ATF-Signal eine niedrige Frequenz von etwa 130 kHz verwendet, die an der unteren Grenze des Übertragungsbereiches liegt.

Es hat sich gezeigt, daß ein derartiges ATF-Signal wegen seiner niedrigen Frequenz bei der Überspielung Schwierigkeiten bei der Löschung des aufgezeichneten Signals bewirkt. Dadurch kommt es durch nicht gelöschte Reste des ATF-Signals zu einer Beeinträchtigung der Wirkung des ATF-Signals bei der Spurführungssteuerung.

Der Erfindung liegt die Aufgabe zugrunde, das Verfahren der beschriebenen Art so auszubilden, daß trotz der niedrigen Frequenz des ATF-Signals keine Schwierigkeiten beim Löschvorgang auftreten und die Wirkung des ATF-Signals für die Spurfolgesteuerung nicht nachteilig beeinflußt wird.

Diese Aufgabe wird durch die im Anspruch 1 beschriebene Erfindung gelöst. Vorteilhafte Weiterbildungen der Erfindung sind in den Unteransprüchen beschrieben.

Durch die erfindungsgemäße Unterbrechung der jeweiligen Halbwellen des Pilot- oder Synchronisiersignals mittels der kurzen Tastungen auf einen anderen Amplitudenwert, z.B. den der entgegengesetzten Halbwelle, werden dem Pilotsignal starke hochfrequente Spektralanteile zugeführt. Dadurch werden die an sich auftretenden Schwierigkeiten bei der Löschung des Signals überwunden. Trotzdem kann die Grundwelle des Signals unverändert für die ATF-Spurfolgesteuerung ausgewertet werden. Vorzugsweise ist die Unterbrechung d.h. Tastung, jeweils einer Halbwelle mit dem Bittakt des aufgezeichneten Nutzsignals verkoppelt. Dabei ergibt sich der Vorteil, daß die Taktung auch während der Aufzeichnung des ATF-Signals aufrechterhalten bleibt. Dadurch können Synchronisierstörungen bei der Takt-Rückgewinnung verringert werden. Es kann gegebenenfalls ein bisher im Anschluß an das ATF-Signal aufgezeichnetes zusätzliches Run-In-Signal entfallen. Es hat sich gezeigt, daß außerdem durch die erfindungsgemäßen Unterbrechungen der Wiedergabepegel für die tiefen Pilotfrequenzen erhöht wird. Dadurch kann die Wirkung der ATF-Spurfolgesteuerung oder der Synchronisiersignale zusätzlich verbessert werden.

Die Erfindung wird in folgenden anhand der Zeichnung erläutert. Darin zeigen
- Fig. 1: den Signalverlauf mit der erfindungsgemäßen Tastung (Zeile C),
- Fig. 2: die Anordnung von ATF-Pilotsignalen auf dem Band,
- Fig. 3: Selektionskurven in der Auswertschaltung für die Signale gemäß Fig. 2 und
- Fig. 4: die Amplituden der abgetasteten Signale gemäß Fig. 2

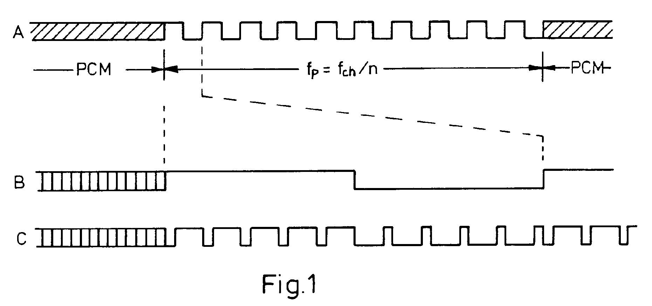

Fig. 1A zeigt ein PCM-Signal, das z.B. in 8/10-Modulation übertragen wird. Die Bitrate des übertragenen Signals ist fch. In das PCM-Signal sind 10 Perioden einer Pilotfrequenz fp=fch/n eingefügt. Die Pegelübergänge des Pilotsignals liegen in dem durch den Bittakt gegebenen Zeitraster. In Fig. 1B ist für n=40 die erste Periode des Pilotsignals dargestellt.
In Fig. 1C sind die Halbwellen des Pilotsignals durch kurze Tastungen auf den Amplitudenwert der jeweils entgegengesetzten Halbwelle unterbrochen. Die Tastung erfolgt jeweils für die Dauer eines Bits. Zwischen den Tastungen behält das Pilotsignal für die Dauer von 3 Bits seinen ursprünglichen Amplitudenwert bei.

Das in dieser Weise aufbereitete Pilotsignal bringt vor allen Vorteile bei der magnetischen Aufzeichnung ihne Löschkopf durch bessere Löschung der alten Aufzeichnung. Bei der allgemeinen Signalübertragung bestehen die Vorteile in dem höheren Taktgehalt des Signals. Die Taktregenerierung oder die Aufrechterhaltung eines Synchronzustandes während der Pilotzeit wird sicherer bzw. überhaupt erst ermöglicht.

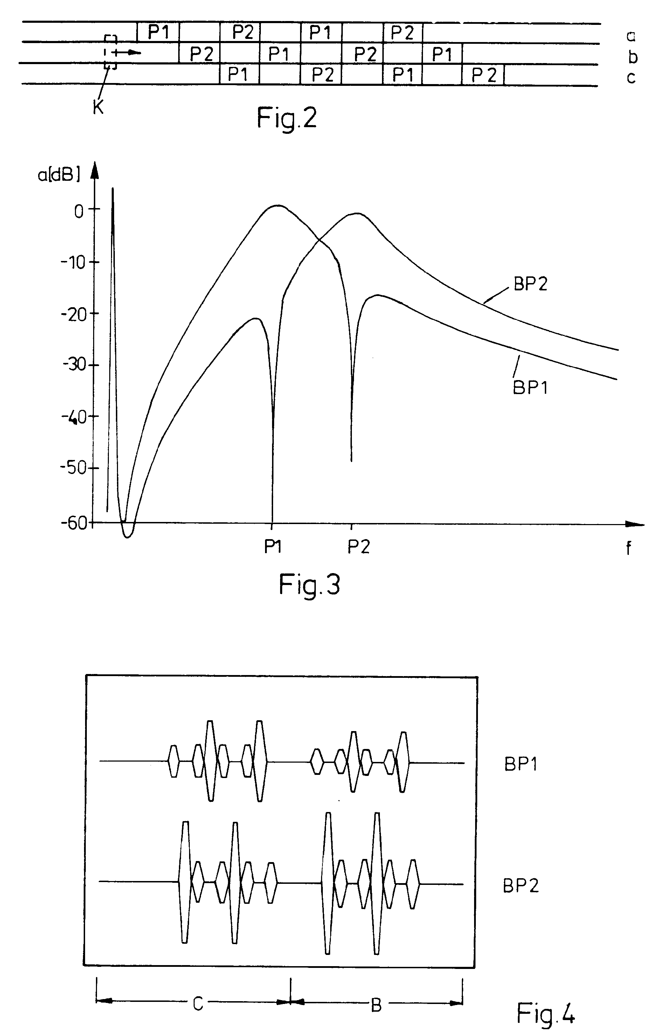

Es ist aber auch offensichtlich, daß die Energie der Grundwelle des Pilotsignals durch die Tastung vermindert wird. Um zu klären, wie sich diese Tatsache bei einer Magnetbandübertragung auswirkt, wurde der durch die Figuren 2, 3 und 4 erläuterte Versuch durchgeführt. Vor allem sollte bei dem Versuch geklärt werden, ob der "zerhackte Pilot" bei Verwendung der Pilotfrequenz für Spurführungszwecke (ATF) Nachteile bringt.

Der Versuch erfolgte mit einem 8 mm Videoaufzeichnungsgerät im Long-Play-Betrieb. Das in Fig. 2 dargestellte Muster zweier Pilotfrequenzen P1 und P2 wurde dabei verwendet. Dem einen Kopf war also die Folge P1, P2, P1, P2 zugeordnet, während der andere Kopf die Folge P2,P1,P2,P1 erhielt. Jeder Kopf zeichnete die ihm zugeordnete Folge pro Spur zweimal hintereinander auf, wobei die erste Folge den zerhackten Pilot (Fig, 1C) enthielt und die zweite Folge den Pilot gemäß Fig. 1B. Die übrige Aufzeichnung bestand aus einem PCM-Signal in 8/10 - Modulation. Die Aufzeichnungsbitrate betrug 11,264 Mbit/s d.h. fch=11,264 MHz. Die Pilotfrequenzen betrugen P1=fch/72=156,4 kHz und P2=fch/48=234,7 kHz. Die Dauer der einzelnen Pilotabschnitte betrug ca 64»s, d.h. sie entsprach dem durch die Schrägspuraufzeichnung bedingten Spurversatz.

Im Wiedergabebetrieb wird der Kopf so geführt, daß er die beiden Nachbarspuren gleich weit überragt (Fig, 2). Dabei kann infolge des Azimutschutzes nur das PCM-Signal aus der mittleren Spur b eine Signalspannung im Kopf induzieren. Die tiefen Pilotfrequenzen unterliegen nicht dem Azimutschutz. Hier wirken sich auch die Signale aus den Nachbarspuren a und c auf den Kopf in der Spur b aus. Das abgetastete Signal wurde am Ausgang zweier Bandpässe, deren Frequenzgänge BP1 und BP2 in Fig. 3 dargestellt sind, oszillographisch dargestellt (Fig. 4). Jeder Bandpaß war auf eine der beiden Pilotfrequenzen abgestimmt und unterdrückte die jeweils andere Pilotfrequenz und das PCM-Signal.

Das Oszillogram zeigt oben das Ausgangssignal von BP1 und unten das Ausgangssignal von BP2. Infolge des starken Frequenzgangabfalles der Magnetbandübertragung zu tiefen Frequenzen hin ist die Amplitude von P1 merklich kleiner als die Amplitude von P2. Während bei P2 der zerhackte Pilot (Bereich C) erwartungsgemäß mit kleinerer Amplitude übertragen wird als der herkömmliche Pilot (Bereich B), ist dies bei dem tieferfrequenten Pilot P1 umgekehrt. Dieses zeigt, daß das Tasten der Pilotfrequenz unterhalb einer bestimmten Frequenz, die hier bei ca 200 kHz liegt, auch hinsichtlich des Wiedergabepegels bei der Magnetbandübertragung vorteilhaft ist.

Bei dem hier beschriebenen Versuch erfolgte das Tasten der Pilothalbwellen wie in Fig. 1 beschrieben, d.h. nach jeweils drei Bits unveränderter Halbwellenamplitude wurde für die Dauer eines Bits der Amplitudenwert der entgegengesetzten Halbwelle eingetastet. Die Tastung des Pilots kann natürlich auch in anderer Weise erfolgen. Hierfür sind einige Möglichkeiten in den Unteransprüchen angegeben.

## Patentansprüche

1. Verfahren zur Übertragung eines Signals mit einem Pilot- und/oder Synchronisiersignal, dessen Frequenz (P1, P2) nahe der unteren Frequenzgrenze des Übertragungskanals liegt,dadurch gekennzeichnet, daß die Halbwellen des Pilot- bzw. Synchronisiersignals durch im Vergleich zur Periode der Pilothalbwellen kurze Eintastungen eines vom augenblicklichen Amplitudenwert der Pilothalbwelle abweichenden Amplitudenwertes (0 bzw. 1) unterbrochen sind.

2. Verfahren nach Anspruch 1, dadurch gekennzeichnet, daß der eingetastete Amplitudenwert der Amplitudenwert der entgegengesetzten Halbwelle ist.

3. Verfahren nach Anspruch 1, dadurch gekennzeichnet, daß der zeitliche Abstand der Tastungen konstant ist.

4. Verfahren nach Anspruch 1, dadurch gekennzeichnet, daß der zeitliche Abstand und/oder die Dauer und/oder der eingetastete Amplitudenwert der Tastungen einem weiteren Signal entspricht.

5. Verfahren nach einem oder mehreren der vorgehenden Ansprüche, dadurch gekennzeichnet, daß bei der Übertragung eines Digitalsignals die Tastung mit dem Bittakt des Digitalsignals verkoppelt ist.

6. Verfahren nach Anspruch 5, dadurch gekennzeichnet, daß die Tastfrequenz gleich der Wortfrequenz oder gleich einen ganzzahligen Vielfachen der Wortfrequenz des Digitalsignals ist.

7. Verfahren nach Anspruch 4, oder 5 dadurch gekennzeichnet, daß die Tastung eine Information enthält.

8. Verfahren nach Anspruch 5 oder 6, dadurch gekennzeichnet, daß die Dauer der Tastung mit der Bitdauer des Digitalsignals übereinstimmt.

9. Verfahren nach einem oder mehreren der Ansprüche 5... 8, dadurch gekennzeichnet, daß die Anzahl der zwischen 2 Tastungen liegenden Bits die maximale Run Length des Digitalsignals nicht übersteigt.

10. Verfahren nach Anspruch 7, dadurch gekennzeichnet, daß die Information bei einem Aufzeichnungsgerät, bei dem eine oder mehrere getastete Pilotfrequenzen für die Spurführung (ATF) ausgewertet werden, für die Auswertung erforderliche Aussagen enthält.

## Claims

1. Method for the transmission of a signal including a pilot and/or synchronising signal whose frequency (P1, P2) lies close to the lower frequency limit of the transmission channel, characterised in that, the half-waves of the pilot or synchronising signal are interrupted by keying operations, which are short in comparison with the period of the pilot half-waves, of an amplitude value (0 or 1) which deviates from the instantaneous amplitude value of the pilot half-wave.

2. Method in accordance with Claim 1, characterised in that, the keyed-in amplitude value is the amplitude value of the opposite half-wave.

3. Method in accordance with Claim 1, characterised in that, the separation in time of the keying actions is constant.

4. Method in accordance with Claim 1, characterised in that, the separation in time and/or the duration and/or the keyed-in amplitude value of the keying actions corresponds to a further signal.

5. Method in accordance with one or more of the preceding Claims, characterised in that, during the transmission of a digital signal, the keying action is linked to the bit rate of the digital signal.

6. Method in accordance with Claim 5, characterised in that, the keying frequency is equal to the word frequency or equal to an integral multiple of the word frequency of the digital signal.

7. Method in accordance with Claim 4, or 5, characterised in that, the keying action contains an item of information.

8. Method in accordance with Claim 5 or 6, characterised in that, the duration of the keying action coincides with the bit length of the digital signal.

9. Method in accordance with one or more of the Claims 5 ... 8, characterised in that, the number of bits occuring between 2 keying actions does not exceed the maximum run length of the digital signal.

10. Method in accordance with Claim 7, characterised in that, for a recording device in which one or more keyed pilot frequencies are evaluated for the track following (ATF), the item of information contains the propositions required for the evaluation.

## Revendications

1. Procédé pour la transmission d'un signal avec un signal pilote et/ou de synchronisation dont la fréquence (P1, P2) se situe près du seuil inférieur de la fréquence du canal de transmission, **caractérisé en ce** que les demi-ondes du signal pilote ou de synchronisation sont interrompues par des introductions, qui sont courtes par comparaison à la période des demi-ondes pilotes, d'une valeur d'amplitude (0 ou 1) qui diffère de la valeur d'amplitude momentanée de la demi-onde pilote.

2. Procédé selon la revendication 1, **caractérisé en ce** que la valeur d'amplitude introduite est la valeur d'amplitude de la demi-onde opposée.

3. Procédé selon la revendication 1, **caractérisé en ce** que l'intervalle temporel entre les introductions est constant.

4. Procédé selon la revendication 1, **caractérisé en ce** que l'intervalle temporel et/ou la durée et/ou la valeur d'amplitude introduite des introductions correspond à un autre signal.

5. Procédé selon l'une ou plusieurs des revendications précédentes, **caractérisé en ce** que lors de la transmission d'un signal numérique l'introduction est couplée au rythme binaire du signal numérique.

6. Procédé selon la revendication 5, **caractérisé en ce** que la fréquence cyclique est égale à la fréquence de mot ou égale à un multiple entier de la fréquence de mot du signal numérique.

7. Procédé selon la revendication 4 ou 5, **caractérisé en ce** que l'introduction contient une information.

8. Procédé selon la revendication 5 ou 6, **caractérisé en ce** que la durée de l'introduction coïncide avec la durée binaire du signal numérique.

9. Procédé selon l'une ou plusieurs des revendications 5 à 8, **caractérisé en ce** que le nombre des bits qui se situent entre 2 introductions ne dépasse pas la run length maximale du signal numérique.

10. Procédé selon la revendication 7, **caractérisé en ce** que l'information contient, pour un appareil d'enregistrement dans lequel une ou plusieurs fréquences pilotes introduites sont exploitées pour le guidage de pistes (ATF), des renseignements nécessaires à l'exploitation.
